# EUROPÄISCHE PATENTSCHRIFT

(11) **EP 2 783 615 B1**
(45) Veröffentlichungstag und Bekanntmachung des Hinweises auf die Patenterteilung: **04.05.2016**
(21) Anmeldenummer: 14001094.3
(22) Anmeldetag: 25.03.2014
(51) Int. Cl.: A47L 1/05, A47L 11/40

(54) **Vorrichtung zur Reinigung glatter Oberflächen**
Device for cleaning smooth surfaces
Dispositif de nettoyage de surfaces lisses

(30) Priorität: 27.03.2013 DE 102013005234; 02.07.2013 DE 102013011004
(43) Veröffentlichungstag der Anmeldung: 01.10.2014
(73) Patentinhaber: Jobb, Walter, 86368 Gersthofen (DE)
(72) Erfinder: Jobb, Walter, 86368 Gersthofen (DE)
(74) Vertreter: Munk, Ludwig

(56) Entgegenhaltungen:
- DE-A1- 10 037 086
- US-A1- 2010 288 520

## Beschreibung

Die Erfindung betrifft eine Vorrichtung zur Reinigung glatter Oberflächen, insbesondere Windschutzscheiben größerer Kraftfahrzeuge wie Lastkraftwagen oder Omnibusse oder dergleichen.

Die bisher in der Praxis verwendeten Vorrichtungen oben genannter Art enthalten jeweils ein an einem Stiel angebrachtes Wischorgan, das mittels des Stiels über die zu reinigende Oberfläche bewegt wird. Vor dem Einsatz des Wischorgans muss die zu reinigende Oberfläche mit einer Reinigungsflüssigkeit beaufschlagt werden, was bisher vielfach dadurch erfolgt, dass das Wischorgan vor dem eigentlichen Wischvorgang in einen Behälter mit Reinigungsflüssigkeit eingetaucht wird. Dieser aus der Praxis bekannte Stand der Technik erweist sich daher als nicht bedienungsfreundlich und zuverlässig genug.

Aus der US 2010/0288520 A1 ergibt sich ein Arbeitsgerät mit einem universell verwendbaren Trägermodul, an dem mehrere Arbeitsmoduln als Wechselaggregate anbringbar sind, wobei eines dieser Wechselaggregate als Vorrichtung zur Reinigung glatter Oberflächen ausgebildet sein kann. Das Trägermodul besteht dabei aus einem Stiel mit daran angebrachtem Antriebsmotor samt zugeordnetem Akku. Die am Stiel anbringbaren Wechselaggregate besitzen dementsprechend keine eigene Antriebseinrichtung. Die Trennung des Antriebsmotors vom Arbeitsmodul führt zu vergleichsweise langen Kraftübertragungswegen, was nicht nur eine komplizierte Bauweise ergibt, sondern auch die Handhabung der gesamten Vorrichtung erschweren kann. Bei dieser bekannten Anordnung erfordert die Trennung zwischen Antriebsmotor und Arbeitsmodul Kompromisse, die bei einer Reinigungsvorrichtung einer optimalen Bauweise entgegenstehen.

Die DE 60 2004 006 066 T2 zeigt eine Reinigungsvorrichtung mit einem antreibbaren Wischorgan mit zugeordneter Sprühdüse für ein Reinigungsmittel. Es ist jedoch keine Abziehlippe zum Abziehen der gereinigten Oberfläche vorgesehen. Die bekannte Anordnung ist nämlich als Vorrichtung zum Schrubben von Bodenflächen ausgebildet, die vielfach nicht abgezogen, sondern trockengerieben werden.

Die CN 2 450 387 zeigt eine Reinigungsvorrichtung mit einer drehbar antreibbaren Tellerbürste, der mittels eines Schlauchs eine Reinigungsflüssigkeit zuführbar ist. Eine Düse zum Versprühen der Reinigungsflüssigkeit ist nicht vorgesehen. Ebenso fehlt auch eine Abziehlippe zum Abziehen der gereinigten Oberfläche. Auch bei dieser bekannten Anordnung ergibt sich daher eine vergleichsweise schwierige Durchführung eines Reinigungsvorgangs.

Die US 2012/0079668 A1 zeigt eine Reinigungsvorrichtung mit einem stationären, nicht antreibbaren Reinigungskopf, dem eine Sprühdüse zum Versprühen von Reinigungsflüssigkeit benachbart ist. Der Reinigungskopf kann mit verschieden ausgebildeten Wischorganen oder alternativ hierzu auch mit einer Abziehlippe bestückt werden. Zum Wischen und Abziehen müssen daher die entsprechenden Organe gewechselt werden. Auch diese Anordnung erweist sich daher als nicht bedienungsfreundlich genug.

Die DE 100 370 086 A1 zeigt eine Vorrichtung zur Reinigung von Scheiben von Kraftfahrzeugen. Diese bekannte Anordnung enthält einen an einem kurzen Handgriff angebrachten Träger, auf dem eine rotierend antreibbare Walze, der eine Reinigungsflüssigkeit zuführbar sein soll, sowie eine Abziehlippe angeordnet sind. Der kurze Handgriff ist jedoch zur Aufnahme eines Tanks für die Reinigungsflüssigkeit nicht geeignet. Dieser muss sich dementsprechend auf dem Träger befinden. Andererseits soll die Walze durch die zugeführte Reinigungsflüssigkeit angetrieben werden. Dies ergibt jedoch nicht nur einen großen Verbrauch an Reinigungsflüssigkeit, sondern erlaubt auch keinen selektiven Antrieb der Walze ohne Verbrauch von Reinigungsflüssigkeit. Auch diese bekannte Anordnung erweist sich daher als nicht bedienungsfreundlich genug.

Aus der WO 2008/014 760 A2 ergibt sich eine Reinigungsvorrichtung für Dachflächen etc. mit einer rotierend antreibbaren Walze, der Reinigungsflüssigkeit zuführbar ist. Der Tank für die Reinigungsflüssigkeit und die Pumpe zum Transport der Reinigungsflüssigkeit befinden sich bei dieser bekannten Anordnung jedoch außerhalb der Vorrichtung und sind hiermit nur durch eine Leitung verbunden. Diese bekannte Vorrichtung ist offenbar auch so schwer, dass der die Reinigungswalze enthaltende Träger mit seitlichen Stützrollen versehen sein muss. Diese können jedoch die Handhabung bei anderen Flächen als Dachflächen sehr beeinträchtigen.

Die US 3 654 656 zeigt eine Reinigungsvorrichtung mit rotierend antreibbarer Walze und dieser zugeordneten Sprühdüsen. Eine Abzieheinrichtung zum Abziehen der gereinigten Oberfläche ist nicht vorgesehen. Der Antrieb der Walze erfolgt durch die Reinigungsflüssigkeit, was einen selektiven Betrieb der Walze ohne Reinigungsflüssigkeit nicht ermöglicht und andererseits zu einem hohen Verbrauch an Reinigungsflüssigkeit führt. Diese wird daher hier von außen zugeführt.

Die DE 199 13 854 A1 zeigt eine Reinigungsvorrichtung mit einer offen angeordneten Scheibenbürste, die über eine biegsame Welle von einem auf einem Stiel angeordnetem Motor aus angetrieben wird und der über einen Schlauch Reinigungsflüssigkeit zugeführt wird. Ein als Aggregateträger ausgebildetes Gehäuse mit einer Abziehlippe ist nicht vorgesehen. Auch diese Anordnung erweist sich als nicht einfach und zuverlässig genug.

Eine ähnliche Anordnung ist aus der DE 198 19 640 A1 bekannt. Bei dieser bekannten Anordnung wird eine offen angeordnete Bürstenscheibe durch Druckluft angetrieben, was den Anschluss an ein Druckluftnetz erfordert.

Hiervon ausgehend ist es die Aufgabe der vorliegenden Erfindung, eine Reinigungsvorrichtung oben genannter Art zu schaffen, die vergleichsweise einfach aufgebaut ist und einfach gehandhabt werden kann und die auch zu einem guten Reinigungsergebnis führt.

Diese Aufgabe wird durch die dem Anspruch 1 zugrunde liegende Merkmalskombination gelöst. Dieser Vorschlag enthält eine Vorrichtung zur Reinigung glatter Oberflächen, insbesondere Windschutzscheiben größerer Kraftfahrzeuge, mit wenigstens einer mittels einer Pumpe mit einer Reinigungsflüssigkeit beaufschlagbaren Sprühdüse, der ein mittels einer zugeordneten Antriebseinrichtung relativ zur zu reinigenden Oberfläche bewegbares Wischorgan sowie wenigstens eine Abziehlippe zugeordnet sind, wobei die Sprühdüse, das Wischorgan und jede Abziehlippe zusammen mit der dem Wischorgan zugeordneten Antriebseinrichtung und der der Sprühdüse zugeordneten Pumpe samt zugehöriger Antriebseinrichtung auf einem gemeinsamen Träger angeordnet sind, wobei die dem Wischorgan und der Pumpe jeweils zugeordneten Antriebseinrichtungen jeweils als durch eine Stromquelle mit Strom versorgbarer Elektromotor ausgebildet sind und wobei der Träger als an seiner der zu reinigenden Oberfläche zugewandten Seite offenes Gehäuse ausgebildet ist, das an einem Stiel angebracht ist, der zumindest einen mit einer Druckausgleichseinrichtung versehenen Tank für die Reinigungsflüssigkeit enthält.

Diese erfindungsgemäße Vorrichtung enthält in vorteilhafter Weise alles, was für eine optimale Arbeitsweise notwendig und zuträglich ist. So sind nicht nur ein antreibbares Wischorgan vorgesehen, sondern auch eine Sprühdüse und eine Abziehlippe. Gleichzeitig ist eine optimale Verteilung der vorhandenen Organe und Elemente samt jeweils benötigter Antriebs- und Speichereinrichtungen auf den Träger und den Stiel vorgesehen, was eine bedienungsfreundliche Handhabung begünstigt.

Vorteilhafte Ausgestaltungen und zweckmäßige Fortbildungen der übergeordneten Maßnahmen sind in den Unteransprüchen angegeben.

Zweckmäßig kann das Wischorgan auswechselbar angeordnet und/oder mit einem auswechselbaren Wischbezug versehen sein. Zur Reinigung bzw. Auswaschen können daher das Wischorgan und/oder der Wischbezug einfach ausgewechselt werden.

Eine weitere vorteilhafte Maßnahme kann darin bestehen, dass die erfindungsgemäße Vorrichtung mit einer Beleuchtungseinrichtung zur Beleuchtung der zu reinigenden Oberfläche versehen ist. Dies erleichtert die Handhabung der erfindungsgemäßen Vorrichtung bei Dunkelheit, was vor allem bei der Reinigung von Windschutzscheiben von Kraftfahrzeugen, die längere Zeit unterwegs sind, von Vorteil sein kann.

Eine besonders zu bevorzugende Fortbildung der übergeordneten Maßnahmen, die auch einen eigenständigen Aspekt der Erfindung darstellt, kann darin bestehen, dass der wenigstens einen Abziehlippe eine Absaugeinrichtung zum Absaugen von Flüssigkeit von der zu reinigenden Oberfläche zugeordnet ist. Die Absaugung der durch die Abziehlippe abgestreiften Flüssigkeit stellt sicher, dass ein Abstreifen bzw. Abtrocknen der Abziehlippe unterbleiben kann, was daher eine zügige Arbeitsweise gestattet und dennoch ein besonders sauberes Reinigungsergebnis erwarten lässt.

Zweckmäßig kann die Absaugeinrichtung eine im Wesentlichen über die Länge der Abziehlippe und dementsprechend die Breite des Trägers sich erstreckende Saugkammer aufweisen, die sich vorteilhaft zwischen der Abziehlippe und einer weiteren, dieser benachbarten Lippe befindet, die kürzer und biegeweicher als die Abziehlippe ist. Diese kürzere und/oder biegeweichere weitere Lippe lässt beim Abziehvorgang die auf der abzuziehenden Oberfläche sich befindende Flüssigkeit passieren, so dass diese von der nachgeordneten Abziehlippe erfasst und zuverlässig abgezogen werden kann. Andererseits stellt die kürzere und/oder biegeweichere weitere Lippe sicher, dass Flüssigkeit, die von der Abziehlippe abgestreift wird und von dieser nach unten abtropft, in der Saugkammer zurückgehalten wird und zuverlässig abgesaugt werden kann. Diese Maßnahmen lassen daher ein besonders gutes Reinigungsergebnis erreichen.

Zweckmäßig kann die Abziehlippe mit zugeordneter Absaugeinrichtung auf der von der dem Wischorgan zugeordneten offenen Seite des Trägers abgewandten Seite des Trägers angeordnet sein. Die Vorrichtung kann daher einfach um 180° gedreht werden, um nach Abschluss des Reinigungsvorgangs die gereinigte Oberfläche abzuziehen und gegebenenfalls die abgestreifte Reinigungsflüssigkeit abzusaugen. Dabei ist zuverlässig sichergestellt, dass das Wischorgan die abgezogene Oberfläche nicht nochmals befeuchten kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung ersichtlich.

In der nachstehend beschriebenen Zeichnung zeigen:
- Figur 1: zeigt eine schematische Schnittansicht einer erfindungsgemäßen Vorrichtung.
- Figur 2: zeigt eine Seitenansicht einer leicht abgewandelten erfindungsgemäßen Vorrichtung.
- Figur 3: zeigt eine Seitenansicht einer nochmals leicht abgewandelten erfindungsgemäßen Vorrichtung.
- Figur 4: zeigt eine schematische seitliche Schnittansicht der Vorrichtung von Figur 3.
- Figur 5: zeigt eine Seitenansicht einer nochmals leicht abgewandelten erfindungsgemäßen Vorrichtung.
- Figur 6: zeigt eine Seitenansicht eines Teils eines Trägers einer erneut abgewandelten erfindungsgemäßen Vorrichtung.
- Figur 7: zeigt eine schematische Schnittansicht des zur Vorrichtung von Figur 6 gehörenden Stiels.

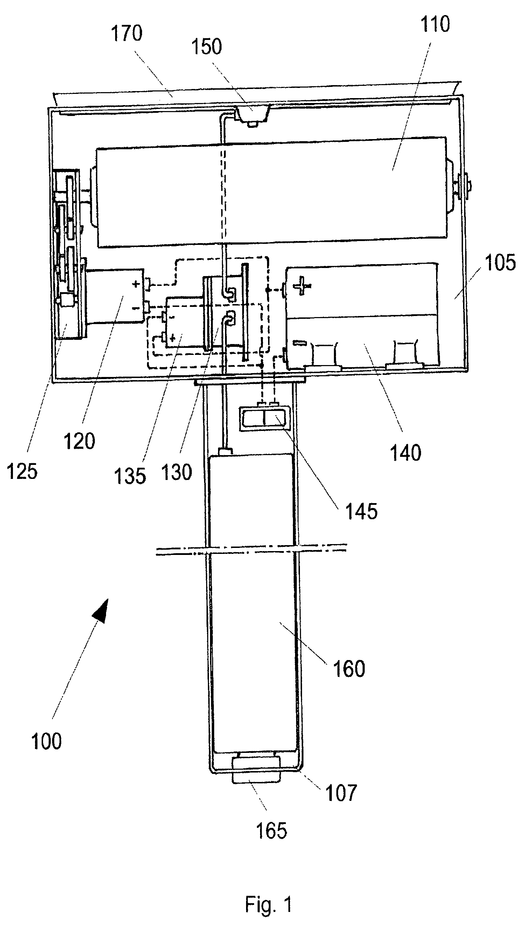

Figur 1 zeigt eine erfindungsgemäße Vorrichtung 100 zur Reinigung glatter Oberflächen, beispielsweise von LKW-Windschutzscheiben. Die Vorrichtung 100 weist einen Träger 105 und einen daran angebrachten Stiel 107 auf. An dem Stiel 107 kann die Vorrichtung 100 gehalten werden. Der Stiel ist in der Darstellung von Figur 1 unterbrochen dargestellt, so dass er in Wirklichkeit vorliegend länger ist als in der Figur zu sehen ist.

Die Vorrichtung 100 von Figur 1 weist eine Walze 110 als Wischorgan auf. Die Walze 110 ist vorliegend quer zu einer Längsrichtung des Stiels 107 ausgerichtet. Gleichzeitig ist die Walze 110 rotierbar gelagert. Damit kann erreicht werden, dass die Walze durch eine Rotationsbewegung einen sehr ähnlichen Effekt auf einer zu reinigenden Oberfläche erzielt als würde ein Benutzer die Vorrichtung entlang einer Längsrichtung des Stiels hin- und herbewegen. Anders ausgedrückt wird durch eine solche Rotationsbewegung die Walzenoberfläche relativ zur zu reinigenden Oberfläche bewegt, was einen reinigenden Effekt ähnlich zu einer manuell ausgelösten und beim Benutzer kräftezehrenden Wischbewegung erzeugt.

Die Walze 110 ist mit einem Wechselbezug versehen, welcher ein einfaches Auswechseln der Oberfläche der Walze 110 ermöglicht. Der Wechselbezug ermöglicht ein einfaches Reinigen und sogar ein mehrfaches Wechseln der Oberfläche der Walze 110 auch auf längeren Touren eines Kraftfahrzeugs.

Zum rotierenden Antrieb der Walze 110 ist in dem Träger 105 ein Elektromotor 120 vorgesehen. Der Elektromotor 120 ist mittels eines Vorgeleges 125 antriebsmäßig mit der Walze 110 verbunden. Dies ermöglicht es, die Walze 110 durch Versorgung des Elektromotors 120 mit elektrischer Energie anzutreiben. Der Benutzer muss folglich keine Muskelkraft mehr aufwenden, um eine Bewegung einer reinigenden Oberfläche über eine zu reinigende Stelle zu erzielen. Dies erfolgt durch den Elektromotor automatisch.

Das Vorgelege 125 ist seitlich neben der Walze 110 und seitlich neben dem Elektromotor 120 angeordnet. Dies ermöglicht eine durchgängige Bauart der Walze, welche nur von einem ihrer beiden Längsenden aus angetrieben wird.

In einer alternativen, nicht dargestellten Ausführung wird die Walze mittels eines mittig zur Walze angeordneten Keilriemens angetrieben. Dies erfordert eine partielle Unterbrechung der für eine Reinigung zur Verfügung stehenden Oberfläche der Walze. Bei einer Ausführung mit Wechselbezug wird es erforderlich sein, zwei Wechselbezüge vorzusehen, jeweils einen für jede Seite der Walze relativ zum Keilriemen. Vorteilhaft an der Ausführung mit mittig angeordnetem Keilriemen ist die Verringerung der Materialbelastung der Walze, da die Walze die von dem Elektromotor ausgeübte Antriebskraft nur über ihre halbe Länge übertragen muss. Dies ist besonders bei großen Vorrichtungen mit entsprechend langen Walzen, wie sie beispielsweise zur Reinigung großer Scheibenflächen von LKWs oder Reisebussen eingesetzt werden können, vorteilhaft. Für Haushaltsgeräte kann demgegenüber die Ausführung mit einem einseitig angeordneten Vorgelege vorteilhaft sein, da auf die Verwendung zweier separater Wechselbezüge verzichtet werden kann.

Die Vorrichtung 100 weist ferner eine an dem Träger 105 angeordnete Sprühdüse 150 auf, welche vorliegend als Fächerdüse ausgebildet ist. Die Sprühdüse 150 ist neben der Walze 110 auf ihrer dem Stiel 107 gegenüberliegenden Seite angeordnet und ermöglicht die Besprühung einer zu reinigenden Oberfläche mit Reinigungsflüssigkeit.

Zur Beaufschlagung der Sprühdüse 150 mit einer Reinigungsflüssigkeit ist vorliegend eine Pumpe 130 vorgesehen. Diese wird durch einen Elektromotor 135 angetrieben, so dass Reinigungsflüssigkeit zu der Sprühdüse 150 gepumpt wird, wenn der Elektromotor 135 mit elektrischer Energie versorgt wird. Im Vergleich zu einer ebenfalls möglichen, nicht dargestellten alternativen Ausführung mit einer handbetätigten Pumpe ermöglicht die Ausführung mit der durch den Elektromotor 135 angetriebenen Pumpe 130 eine automatische Beaufschlagung der Sprühdüse 150 mit Reinigungsflüssigkeit, was den nötigen Arbeits- und Kraftaufwand für den Benutzer weiter verringert.

Zur Versorgung des Elektromotors 120 zum Antrieb der Walze 110 und des Elektromotors 135 zum Antrieb der Pumpe 130 ist vorliegend eine Batterie 140 in dem Träger 105 vorgesehen. Die Batterie 140 ermöglicht einen autarken Betrieb der Vorrichtung 100, d.h. sie ist zu ihrem Betrieb nicht auf die Zuführung elektrischer Energie von außen angewiesen. Vielmehr dient die Batterie 140 als Energiequelle.

Zum Ein- und Ausschalten des Elektromotors 120 zum Antrieb der Walze 110 und des Elektromotors 135 zum Antrieb der Pumpe 130 ist vorliegend ein Schalter 145 vorgesehen. Der Schalter 145 ist in der Darstellung von Figur 1 an einem Ende des Stiels 107 angeordnet gezeigt, welches an den Träger 105 angrenzt. Eine solche Ausführung ist besonders für einen Betrieb geeignet, in welchem die Elektromotoren 120, 135 vor der Benutzung gemeinsam eingeschaltet werden und dann so lange angeschaltet bleiben, bis der Reinigungsvorgang abgeschlossen ist und der Benutzer den Träger 105 wieder zu sich her zieht. Durch die in Figur 1 gezeigte Anordnung wird ein unbeabsichtigtes Ausschalten der Elektromotoren 120, 135 verhindert.

Alternativ zur gezeigten Ausführung könnte der Schalter auch an dem gegenüberliegenden Ende des Stiels 107 angeordnet sein, an welchem ein Benutzer den Stiel üblicherweise in die Hand nimmt um den Reinigungsvorgang auszuführen. Damit wird erreicht, dass dem Benutzer ein Ein- und Ausschalten der Elektromotoren 120, 135 auch während des Reinigungsvorgangs ermöglicht wird, ohne dass er dazu den Träger 105 zu sich her holen muss.

Alternativ zur gezeigten Ausführung mit einem Schalter 145 könnten in einer nicht gezeigten Ausführung auch zwei separate Schalter vorgesehen sein. In einem solchen Fall wird typischerweise einer der beiden Schalter zum Ein- und Ausschalten des Elektromotors 120 der Walze 110 vorgesehen sein, während der andere der beiden Schalter zum Ein- und Ausschalten des Elektromotors 135 der Pumpe 130 vorgesehen ist. Eine solche Ausführung ermöglicht eine voneinander unabhängige Schaltung der beiden Elektromotoren 120, 135. Damit kann beispielsweise vorteilhaft der Elektromotor 135 der Pumpe 130 während eines Reinigungsvorgangs abgeschaltet werden, wenn sich genug Reinigungsflüssigkeit auf der zu reinigenden Oberfläche befindet. Der Reinigungsvorgang kann jedoch unter weiterhin fortbestehender Rotation der Walze 110 fortgesetzt werden, bis die zu reinigende Oberfläche vollständig gereinigt ist. Hierzu wird der Schalter, welcher zum Ein- und Ausschalten des Elektromotors 120 der Walze 110 dient, in seiner eingeschalteten Position gelassen.

Bei einer Ausführung mit zwei separaten Schaltern ist es insbesondere vorteilhaft, die beiden Schalter an demjenigen Ende des Stiels 107 anzubringen, an welchem der Benutzer während des Betriebs die Vorrichtung 100 in der Hand hält. Dies ermöglicht beispielsweise die bereits beschriebene Abschaltung des Elektromotors 135 der Pumpe 130 während des Betriebs, ohne dafür den Rahmen 105 zum Benutzer zurück zu holen.

Zur Aufbewahrung der Reinigungsflüssigkeit, welche mittels der Sprühdüse 150 auf die zu reinigende Oberfläche gesprüht werden soll, ist in dem Stiel 107 ein Tank 160 angeordnet. Der Tank 160 ermöglicht die Verwendung der Vorrichtung 100 ohne dass sie auf eine externe Zufuhr von Reinigungsflüssigkeit angewiesen wäre. Dies ermöglicht einen autarken Betrieb der Vorrichtung 100.

Die Anordnung im Stiel 107 sorgt dafür, dass die relativ schwere, weil meistens überwiegend aus Wasser bestehende Reinigungsflüssigkeit an einem verhältnismäßig tiefen Punkt in der Vorrichtung 100 angeordnet ist, wenn die Vorrichtung 100 vom Benutzer derart gehalten wird, dass sich der Stiel 107 unten und der Träger 105 oben befindet. Eine derartige Haltung wird typischerweise verwendet, um über dem Benutzer angeordnete Flächen, beispielsweise die Scheiben von LKWs oder Reisebussen zu reinigen. Durch die Anordnung der Reinigungsflüssigkeit an einem verhältnismäßig tiefen Punkt wird dabei eine günstige Lage des Schwerpunkts erreicht. Dieser wird bei einer tiefen Lage der Reinigungsflüssigkeit selbst relativ tief angeordnet sein, was einer Kopflastigkeit der Vorrichtung 100 entgegenwirkt, welche die Handhabbarkeit aufgrund erhöhten Kraftbedarfs einschränken würde.

Der Tank 160 ist wie gezeigt mittels entsprechender Leitungen mit der Pumpe 130 verbunden, welche wiederum mit der Sprühdüse 150 verbunden ist. Somit kann die Pumpe 130 Reinigungsflüssigkeit aus dem Tank 160 zur Sprühdüse 150 pumpen und auf diese Weise für eine Besprühung der zu reinigenden Oberfläche mit der Reinigungsflüssigkeit sorgen.

Der Tank 160 weist ferner eine Druckausgleichseinrichtung 165 auf, welche dafür sorgt, dass bei Entnahme von Reinigungsflüssigkeit aus dem Tank 160 der dabei ansonsten entstehende Unterdruck im Tank durch die kontrollierte Zufuhr von Umgebungsluft ausgeglichen wird. Dies erleichtert die Entnahme von Reinigungsflüssigkeit aus dem Tank und beugt erhöhter Materialbelastung vor.

Angrenzend an die Sprühdüse 150 ist eine Abziehlippe 170 angebracht, welche vorliegend aus einem Gummi ausgebildet ist. Die Abziehlippe kann dabei eine ähnliche Funktion erfüllen wie ein konventioneller Fensterabzieher. Insbesondere nimmt die Abziehlippe 170 Reinigungsflüssigkeit und Schmutz, welche sich auf der zu reinigenden Oberfläche befinden, bei einer Bewegung der Abziehlippe über die entsprechende Stelle auf der zu reinigenden Oberfläche mit. Damit kann beispielsweise das sich auf der zu reinigenden Oberfläche befindende Gemisch aus Reinigungsflüssigkeit und Schmutz durch eine nach unten gerichtete Bewegung der Vorrichtung 100 mit an der zu reinigenden Oberfläche anliegender Abziehlippe 170 nach unten abgezogen werden. Auch ein Abziehen zur Seite ist bei entsprechender Führung der Vorrichtung 100 möglich. Durch den Vorgang des Abziehens kann mittels der Abziehlippe 170 die zu reinigende Oberfläche so gereinigt werden, dass nach Abschluss des Reinigungsvorgangs keine Reinigungsflüssigkeit und kein Schmutz mehr auf der Oberfläche verbleibt. Dies ermöglicht ein professionelles und sauberes Reinigungsergebnis.

Es sei erwähnt, dass die erfindungsgemäße Vorrichtung 100 die Durchführung der Arbeitsschritte des Besprühens der zu reinigenden Oberfläche mit Reinigungsflüssigkeit, der Reinigung mittels Wischens sowie des Abziehens mit nur einem Gerät ermöglicht. Die erfindungsgemäße Vorrichtung 100 muss dazu nicht einmal abgesetzt werden. Alternativ zu der an der Vorrichtung 100 angebrachten Abziehlippe 170 könnte auch eine externe Abzieheinrichtung zum Entfernen von Reinigungsflüssigkeit und Schmutz von der zu reinigenden Oberfläche verwendet werden.

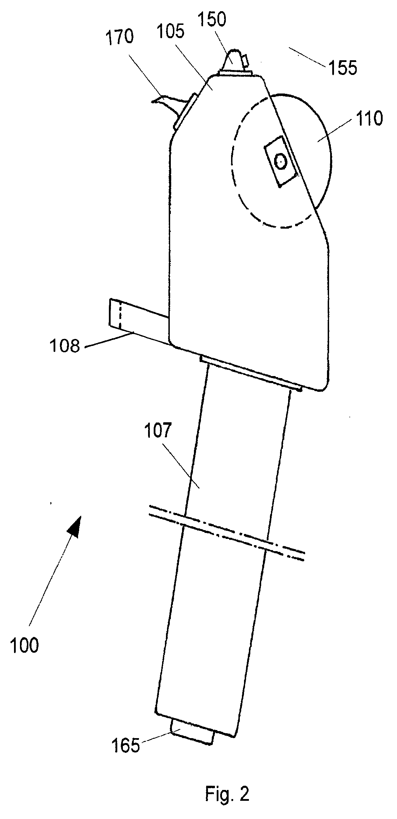

Figur 2 zeigt eine im Vergleich zu Figur 1 leicht abgewandelte Ausführung der Vorrichtung 100. Auch die Vorrichtung 100 von Figur 2 weist einen Träger 105 und einen daran angebrachten Stiel 107 auf. Da es sich bei der Darstellung von Figur 2 nicht um eine Schnittansicht sondern um eine Außenansicht handelt, sind die innenliegenden Komponenten der Vorrichtung 100, welche in Figur 1 zu sehen sind, in Figur 2 nicht sichtbar. Lediglich der innenliegende Teil der Walze 110 ist gestrichelt dargestellt.

Im Unterschied zur Ausführung von Figur 1 ist in der Ausführung von Figur 2 die Sprühdüse 150 außen an dem Träger 105 angebracht. Dies ermöglicht die Besprühung eines weiter von der Sprühdüse entfernten Bereichs. Durch die dabei sich verlängernde Strecke, welche ein aus der Sprühdüse austretender Strahl 155 von Reinigungsflüssigkeit zurücklegen muss bevor er auf die zu reinigende Oberfläche trifft, kann sich der Strahl 155 auch weiter verbreitern als bei der Ausführung gemäß Figur 1. Dies ermöglicht die Besprühung einer größeren Breite.

Des weiteren ist in Figur 2 zu sehen, dass der Träger 105 als Gehäuse ausgebildet ist, welches an seiner der zu reinigenden Oberfläche zugewandten Seite offen ist. Dies gilt gleichermaßen für die Ausführung von Figur 1, nur ist in der Darstellung von Figur 1 die Gehäuseform nicht ausreichend klar zu erkennen. Das Gehäuse ermöglicht einen Schutz des Benutzers und der Umgebung gegen herumspritzenden Schmutz und herumspritzende Reinigungsflüssigkeit, welche von der Walze auch in Richtungen weg von der zu reinigenden Oberfläche abgehen können. Die Figuren 2-4 zeigen auch die Abziehlippe 170, die zweckmäßig auf der der Walze 110 bzw. dem Wischorgan zugeordneten Gehäuseöffnung gegenüberliegenden Seite vom Träger 105 bzw. dem hindurch gebildeten Gehäuse absteht.

An dem Träger 105 kann auch ein Griff 108 angebracht sein, welcher das Halten des Trägers 105 mit der Hand oder das Einhängen in eine dafür ausgebildete Vorrichtung ermöglicht. Letzteres erleichtert die Lagerung und den Transport der Vorrichtung 100, wobei beispielsweise eine Vorrichtung zur Aufnahme des Griffs in einem LKW oder in einem Reisebus ausgebildet sein kann, welche die Vorrichtung 100 bei Nichtbenutzung aufnimmt und verstaut.

An demjenigen Ende des Stiels 107, welches dem Träger 105 gegenüberliegt, ist in Figur 2 noch die Druckausgleichseinrichtung 165 zu erkennen. Sie hat die gleiche Funktion wie bereits mit Bezug auf Figur 1 beschrieben.

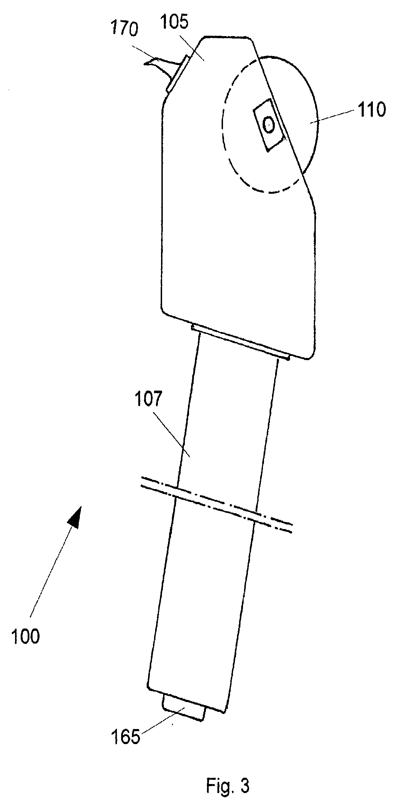

Figur 3 zeigt eine nochmals leicht abgewandelte Ausführung einer erfindungsgemäßen Vorrichtung. Dabei handelt es sich bei Figur 3 um eine Außenansicht, in welcher zunächst nur zu erkennen ist, dass im Vergleich zu Figur 2 die außenliegende Sprühdüse 150 nicht vorhanden ist. Bezüglich aller weiteren Komponenten sei deshalb auf die Beschreibungen der Figuren 1 und 2 verwiesen.

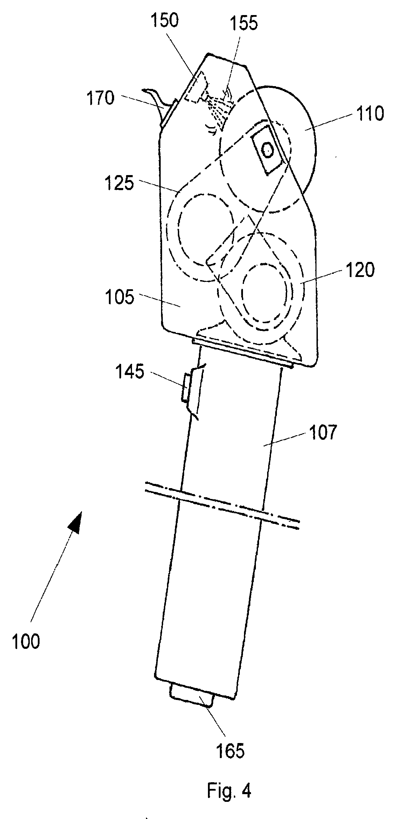

Figur 4 zeigt die Ausführung der Figur 3 in einer Schnittansicht. Damit sind auch die innenliegenden Komponenten schematisch zu erkennen.

Das bereits im Zusammenhang mit Figur 1 erläuterte Vorgelege 125 befindet sich auch in der Ausführung der Figuren 3 und 4 neben der Walze 110.

Im Unterschied zur Ausführung von Figur 1 ist jedoch die Sprühdüse 150 nicht derart angeordnet, dass sie direkt auf die zu reinigende Oberfläche spritzt, sondern vielmehr derart, dass sie auf die Walze 110 spritzt. Damit wird erreicht, dass die Walze 150 unabhängig von der Richtung, in welcher die Walze 110 über die zu reinigende Oberfläche geführt wird, immer ausreichend mit Reinigungsflüssigkeit getränkt wird. Anders ausgedrückt ist die Walze 110 nicht mehr darauf angewiesen, durch an der zu reinigenden Oberfläche anhaftende Reinigungsflüssigkeit getränkt zu werden.

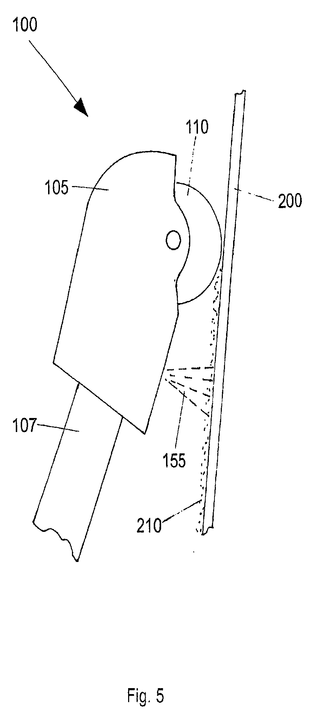

Figur 5 zeigt eine nochmals leicht abgewandelte Ausführung einer erfindungsgemäßen Vorrichtung. Dabei ist im Vergleich zu Figur 1 die Sprühdüse 150, welche in der Ausführung von Figur 5 innenliegend und deshalb nicht zu sehen ist, auf der anderen Seite der Walze 110 angeordnet. sofern die Vorrichtung 100 mit dem Träger 105 nach oben gehalten wird ist die Sprühdüse 150 in der Ausführung von Figur 5 unterhalb der Walze 110 angeordnet.

Damit wird der Strahl 155 unterhalb der Walze 110 auf eine zu reinigende Oberfläche 200 gesprüht. Dies ist besonders dann vorteilhaft, wenn die Vorrichtung 100 zur Durchführung des Reinigungsvorgangs von oben nach unten gezogen wird. Dabei wird auf der zu reinigenden Oberfläche 200 haftender Schmutz 210 von der Walze 110 aufgenommen und entfernt.

Es sei verstanden, dass alternativ zu den gezeigten Anordnungen der Sprühdüse auch zwei Sprühdüsen an dem Träger 105 ausgebildet sein können, wobei an jeder Seite der Walze jeweils eine Sprühdüse angeordnet ist. Ebenso ist es möglich auf jeder der beiden Seiten der Walze mehrere Sprühdüsen oder auch eine Düsenleiste vorzusehen. Damit kann die Reinigungswirkung noch weiter verbessert werden. Vorteilhaft kann eine solche Ausführung mit einer Steuerung versehen sein, welche dafür sorgt, dass je nach Bewegungsrichtung der Walze immer die jeweils der Walze vorgelagerte Düse sprüht. Dies kann beispielsweise mittels eines Dreiwegeventils erreicht werden, welches über einen Aufnehmer die relative Bewegung der zu reinigenden Oberfläche abfühlt. Der Aufnehmer kann als Gleitschuh ausgebildet sein, welcher gleichzeitig den Abstand der Vorrichtung von der zu reinigenden Oberfläche stabilisiert.

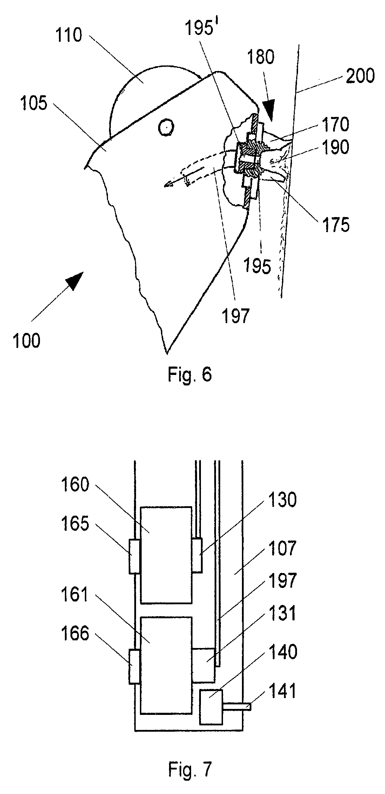

Figur 6 zeigt eine Seitenansicht eines Teils des Trägers 105 einer nochmals abgewandelten erfindungsgemäßen Vorrichtung 100. Dabei ist zu erkennen, dass auf einer der Walze 110 gegenüberliegenden Seite des Trägers 105 eine erste Abziehlippe 170 angeordnet ist, welcher eine Absaugeinrichtung 180 zugeordnet ist. Die Absaugeinrichtung 180 ist unterhalb der abziehenden Abziehlippe 170 vorgesehen, d.h. saugt das von der abziehenden Abziehlippe von der Oberfläche 200 abgestriffene Flüssigkeits-Schmutzgemisch ab.

Die Absaugeinrichtung 180 weist im dargestellten Beispiel eine Saugkammer 190 auf, welche zwischen der ersten Abziehlippe 170 und einer zweiten Abziehlippe 175 ausgebildet ist. Die zweite Abziehlippe 175 ist dabei, wie in Figur 6 zu sehen ist, kürzer als die erste Abziehlippe 170. Somit kann der auf der Oberfläche 200 sich befindende, befeuchtete Schmutzfilm die zweite Abziehlippe 175 weitgehend ungehindert passieren und wird hiervon nicht abgezogen, wenn der Träger 105 nach unten gezogen wird. Die erste Abziehlippe 170 ist dafür vorgesehen, dass der befeuchtete Schmutzfilm bzw. das Wasser auf der Oberfläche 200 von ihr erfasst und zum Träger 105 hin umgelenkt wird. Damit befindet sich das Wasser mit dem Schmutz in der Saugkammer 190.

Zum Absaugen des Wasser-Schmutzgemisches aus der Saugkammer 190 ist eine Anzahl von Absauglöchern 195 vorgesehen. Die Absauglöcher wiederum sind über eine über die Arbeitsbreite durchgehende Sammelkammer 195' mit einer Absaugleitung 197 verbunden, welche mit einer Absaugpumpe verbunden ist. Auf die Absaugpumpe wird später mit Bezug auf Figur 7 noch näher eingegangen werden. Die Absaugpumpe ermöglicht das Anlegen eines Unterdrucks an die Absauglöcher 195. Damit kann aus der Saugkamer 190 das Wasser-Schmutzgemisch, welches beispielsweise wie oben erläutert, von der ersten Abziehlippe 170 von der Oberfläche 200 abgestreift und in die Saugkammer 190 gelenkt wurde, abgesaugt werden.

Die zweite Abziehlippe 175 dient dabei dazu, die Saugkammer 190 bis auf einen engen Schlitz zu verschließen und damit die Flüssigkeit aufzufangen, welche von der ersten Abziehlippe 170 in die Saugkammer 190 gelenkt wurde und welche ohne die zweite Abziehlippe 175 ungehindert nach unten laufen würde. Damit wird erreicht, dass zuverlässig ein Großteil des auf der Oberfläche 200 befindlichen, mit Schmutz beladenen Wassers oder auch anderer Reinigungsflüssigkeit erfasst und abgesaugt wird.

Figur 7 zeigt schematisch einen Teil des Stiels 107, welcher der Ausführung von Figur 6 zugeordnet ist. Dabei ist ein Tank 160 für Reinigungsflüssigkeit mit einer zugeordneten Entlüftungseinrichtung 165 und einer Pumpe 130 wie mit Bezug auf Figur 1 beschrieben, jedoch in einer anderen Anordnung vorgesehen. Des Weiteren ist ein weiterer Tank 161 mit einer zugeordneten Entlüftungseinrichtung 166 vorgesehen, welcher zur Aufnahme von abgesaugtem Wasser oder anderer Flüssigkeit sowie darin befindlichem Schmutz dient. Diesem ist eine Absaugpumpe 131 zugeordnet, welche mit der Absaugleitung 197 verbunden ist. Somit kann die Absaugpumpe 131 die Absaugöffnungen 195 wie oben erwähnt mit Unterdruck beaufschlagen und auf diese Weise Flüssigkeit aus der Saugkammer 190 abziehen. Die abgesaugte Flüssigkeit wird dann dem Tank 161 zugeleitet und in diesem aufbewahrt, bis sie entsorgt oder aufbereitet werden kann.

Des Weiteren ist bei der in Figur 7 gezeigten Ausführung auch eine als Akku ausgeführte Batterie 140 in dem Stiel 107 angeordnet. Dieser ist eine Ladebuchse 141 zugeordnet, welche von außerhalb des Stiels 107 zugänglich ist. Somit kann mittels der Ladebuchse 141 die Batterie 140 geladen werden. In einer Weiterbildung kann auch vorgesehen sein, dass die elektrischen Organe der Vorrichtung 100 während des Betriebs über die Ladebuchse 141 mit elektrischer Energie versorgt werden können.

## Patentansprüche

1. Vorrichtung zur Reinigung glatter Oberflächen (2), insbesondere Windschutzscheiben größerer Kraftfahrzeuge, mit wenigstens einer mittels einer Pumpe (130) mit einer Reinigungsflüssigkeit beaufschlagbaren Sprühdüse (150), der ein mittels einer zugeordneten Antriebseinrichtung (120) relativ zur zu reinigenden Oberfläche (200) bewegbares Wischorgan (110) sowie wenigstens eine Abziehlippe (170) zugeordnet sind, wobei die Sprühdüse (150), das Wischorgan (110) und jede Abziehlippe (170) zusammen mit der dem Wischorgan (110) zugeordneten Antriebseinrichtung (120) und der der Sprühdüse (150) zugeordneten Pumpe (130) samt zugehöriger Antriebseinrichtung auf einem gemeinsamen Träger (105) angeordnet sind, wobei die dem Wischorgan (110) und der Pumpe (130) jeweils zugeordneten Antriebseinrichtungen jeweils als durch eine Stromquelle mit Strom versorgbarer Elektromotor ausgebildet sind und wobei der Träger (105) als an seiner der zu reinigenden Oberfläche (200) zugewandten Seite offenes Gehäuse ausgebildet ist, das an einem Stiel (107) angebracht ist, der zumindest einen mit einer Druckausgleichseinrichtung versehenen Tank (160) für die Reinigungsflüssigkeit enthält.

2. Vorrichtung nach Anspruch 1, **dadurch gekennzeichnet, dass** das Wischorgan (110) als rotierend antreibbare Walze und/oder vibrierend antreibbarer Klotz ausgebildet ist.

3. Vorrichtung nach Anspruch 2, **dadurch gekennzeichnet, dass** die das Wischorgan (110) bildende Walze über ein Vorgelege (125) mit dem die zugeordnete Antriebseinrichtung (120) bildenden Antriebsmotor verbunden ist, wobei das Vorgelege (125) seitlich neben einer Stirnseite der Walze (110) angeordnet ist und als vormontierbare Baueinheit mit wenigstens einer seitlichen Lagerplatte ausgebildet ist, an welcher der Antriebsmotor mit zur Walze paralleler Achse angebracht ist.

4. Vorrichtung nach Anspruch 2, **dadurch gekennzeichnet, dass** die das Wischorgan (110) bildende Walze über einen mittig zur Walze angeordneten Keilriemen mit dem die Antriebseinrichtung (120) bildenden Antriebsmotor verbunden ist.

5. Vorrichtung nach einem der vorhergehenden Ansprüche, **dadurch gekennzeichnet, dass** das Wischorgan (110) auswechselbar angeordnet und/ oder mit einem auswechselbaren Wischbezug versehen ist.

6. Vorrichtung nach einem der vorhergehenden Ansprüche, **dadurch gekennzeichnet, dass** der wenigstens einen Abziehlippe (170) eine Absaugeinrichtung (180) zum Absaugen von Flüssigkeit von der zu reinigenden Oberfläche (200) zugeordnet ist.

7. Vorrichtung nach Anspruch 6, **dadurch gekennzeichnet, dass** die Absaugeinrichtung (180) eine im Wesentlichen über die Breite des Trägers (105) sich erstreckende Saugkammer (190) aufweist, welche mit einer Absaugpumpe (131) strömungsmäßig verbunden ist, der ein Tank (161) zur Aufnahme abgesaugter Flüssigkeit zugeordnet ist, der mit einer Druckausgleichseinrichtung (166) versehen ist.

8. Vorrichtung nach Anspruch 7, **dadurch gekennzeichnet, dass** die Saugkammer (190), von der mehrere Absauglöcher (195) abgehen, zwischen der Abziehlippe (170) und einer dieser benachbarten weiteren Lippe (175) vorgesehen ist, die kürzer und/oder biegeweicher als die Abziehlippe (170) ist.

9. Vorrichtung nach einem der vorhergehenden Ansprüche 6 - 8, **dadurch gekennzeichnet, dass** die Abziehlippe (170) mit zugeordneter Absaugeinrichtung (180) im Bereich der der offenen Seite des den Träger (105) bildenden Gehäuses gegenüberliegenden Seite des Trägers (105) angeordnet ist.

10. Vorrichtung nach einem der vorhergehenden Ansprüche, **dadurch gekennzeichnet, dass** der Tank (161) der Absaugeinrichtung (180) und vorzugsweise auch deren Pumpe (131) im Stiel (107) angeordnet ist bzw. sind.

11. Vorrichtung nach einem der vorhergehenden Ansprüche, **dadurch gekennzeichnet, dass** wenigstens eine als Akku (140) ausgebildete Batterie als Stromquelle für die jeweils als Elektromotor ausgebildeten Antriebseinrichtungen vorgesehen ist und dass am Stiel (107) eine Ladebuchse (114) und/oder eine Anzahl von Ladekontakten zum Laden eines zugeordneten Akkus (140) angeordnet ist.

12. Vorrichtung nach einem der vorhergehenden Ansprüche, **dadurch gekennzeichnet, dass** sie eine Beleuchtungseinrichtung zur Beleuchtung der zu reinigenden Oberfläche (200) aufweist.

13. Vorrichtung nach einem der vorhergehenden Ansprüche, **dadurch gekennzeichnet , dass** die Geschwindigkeit der dem Wischorgan (110) zugeordneten Antriebseinrichtung (120) einstellbar ist.

14. Vorrichtung nach einem der vorhergehenden Ansprüche, **dadurch gekennzeichnet, dass** der Stiel (107) verlängerbar ausgebildet ist.

15. Vorrichtung nach einem der vorhergehenden Ansprüche, **dadurch gekennzeichnet, dass** allen ein- und ausschaltbaren bzw. steuerbaren Aggregaten eine im Bereich des Stiels (107) vorgesehene Schalteinrichtung (145) zugeordnet ist.

## Claims

1. A device for cleaning smooth surfaces (2), in particular windshields of large motor vehicles, having at least one spray nozzle (150), to which a cleaning liquid can be applied by means of a pump (130), and to which a wiping element (110), which is movable by means of an assigned drive unit (120) in relation to the surface (200) to be cleaned, and at least one withdrawal lip (170) are assigned, wherein the spray nozzle (150), the wiping element (110), and each withdrawal lip (170), together with the drive unit (120) assigned to the wiping element (110) and the pump (130) assigned to the spray nozzle (150), including associated drive unit, are arranged on a shared carrier (105), wherein the drive units respectively assigned to the wiping element (110) and the pump (130) are each designed as an electric motor which can be supplied with power by a power source, and wherein the carrier (105) is designed as a housing open on its side facing toward the surface to be cleaned (200), which is attached to a shaft (107), which contains at least one tank (160), which is provided with a pressure equalization unit, for the cleaning liquid.

2. The device according to Claim 1, **characterized in that** the wiping element (110) is designed as a roller which can be driven to rotate and/or a block which can be driven to vibrate.

3. The device according to Claim 2, **characterized in that** the roller forming the wiping element (110) is connected via a reduction gear (125) to the drive motor forming the assigned drive unit (120), wherein the reduction gear (125) is arranged laterally adjacent to an end face of the roller (110) and is designed as a pre-installable module having at least one lateral mounting plate, on which the drive motor is attached having axis parallel to the roller.

4. The device according to Claim 2, **characterized in that** the roller forming the wiping element (110) is connected to the drive motor, which forms the drive unit (120), via a V-belt arranged centrally in relation to the roller.

5. The device according to any one of the preceding claims, **characterized in that** the wiping element (110) is arranged so it is replaceable and/or is provided with a replaceable wiping cover.

6. The device according to any one of the preceding claims, **characterized in that** a suction unit (180) for suctioning liquid from the surface (200) to be cleaned is assigned to the at least one withdrawal lip (170).

7. The device according to Claim 6, **characterized in that** the suction unit (180) has a suction chamber (190), which extends substantially over the width of the carrier (105), and which is connected with respect to flow to a suction pump (131), which is assigned a tank (161), which is provided with a pressure equalization unit (166), for receiving suctioned liquid.

8. The device according to Claim 7, **characterized in that** the suction chamber (190), from which multiple suction holes (195) originate, is provided between the withdrawal lip (170) and a further lip (175) adjacent thereto, which is shorter and/or more flexible than the withdrawal lip (170).

9. The device according to any one of preceding Claims 6 to 8, **characterized in that** the withdrawal lip (170) with assigned suction unit (180) is arranged in the region of the side of the carrier (105) opposite to the open side of the housing forming the carrier (105).

10. The device according to any one of the preceding claims, **characterized in that** the tank (161) of the suction unit (180) and preferably also the pump (131) thereof is/are arranged in the shaft (107).

11. The device according to any one of the preceding claims, **characterized in that** at least one battery, which is designed as an accumulator cell (140), is provided as a power source for the respective drive units designed as electric motors, and a charging socket (114) and/or a number of charging contacts for charging an assigned accumulator cell (140) is/are arranged on the shaft (107).

12. The device according to any one of the preceding claims, **characterized in that** it has an illumination unit for illuminating the surface (200) to be cleaned.

13. The device according to any one of the preceding claims, **characterized in that** the speed of the drive unit (120) assigned to the wiping element (110) is adjustable.

14. The device according to any one of the preceding claims, **characterized in that** the shaft (107) is designed as extendable.

15. The device according to any one of the preceding claims, **characterized in that** a switching unit (145), which is provided in the region of the shaft (107), is assigned to all assemblies which can be turned on and off and/or are controllable.

## Revendications

1. Dispositif pour le nettoyage de surfaces lisses (2), en particulier de pare-brise de gros véhicules à moteur, avec au moins une pompe (130) munie d'un gicleur (150) auquel peut être amené un liquide de nettoyage et qui est associé à un organe d'essuyage (110) pouvant être déplacé par rapport à la surface à nettoyer (200) au moyen d'un organe d'entraînement (120) associé et à au moins une lèvre racleuse (170), le gicleur (150), l'organe d'essuyage (110) et chaque lèvre racleuse (170) étant disposés sur un support commun (105) avec le dispositif d'entraînement (120) associé à l'organe d'essuyage (110) et la pompe (130) associé au gicleur (150) avec le dispositif d'entraînement correspondant, les dispositifs d'entraînement associés à l'organe d'essuyage (110) et à la pompe (130) étant conçus chacun comme un moteur électrique pouvant être alimenté en courant par une source de courant et le support (105) étant conçu comme un boîtier ouvert sur sa face tournée vers la surface à nettoyer (200), qui est monté sur un manche (107) contenant au moins un réservoir (160) pour le liquide de nettoyage muni d'un dispositif d'équilibrage de la pression.

2. Dispositif selon la revendication 1, **caractérisé en ce que** l'organe d'essuyage (110) est conformé comme un rouleau pouvant être entraîné en rotation et/ou un bloc pouvant être entraîné en vibration.

3. Dispositif selon la revendication 2, **caractérisé en ce que** le rouleau formant l'organe d'essuyage (110) est relié par un renvoi (125) au moteur d'entraînement formant le dispositif d'entraînement (120) associé, le renvoi (125) étant disposé latéralement à côté d'une face frontale du rouleau (110) et étant conformé comme une unité de construction pouvant être préassemblée avec au moins une plaque d'appui latérale sur laquelle le moteur d'entraînement est disposé avec son axe parallèle au rouleau.

4. Dispositif selon la revendication 2, **caractérisé en ce que** le rouleau formant l'organe d'essuyage (110) est relié au moteur d'entraînement formant le dispositif d'entraînement (120) par une courroie trapézoïdale disposée au centre par rapport au rouleau.

5. Dispositif selon l'une des revendications précédentes, **caractérisé en ce que** l'organe d'essuyage (110) est disposé de façon interchangeable et/ou muni d'une garniture d'essuyage interchangeable.

6. Dispositif selon l'une des revendications précédentes, **caractérisé en ce que** l'au moins une lèvre racleuse (170) est associée à une installation d'aspiration (180) pour l'aspiration de liquide sur la surface à nettoyer (200).

7. Dispositif selon la revendication 6, **caractérisé en ce que** l'installation d'aspiration (180) présente une chambre d'aspiration (190) qui s'étend pour l'essentiel sur la largeur du support (105) et qui communique en vue de l'écoulement avec une pompe d'aspiration (131) associée à un réservoir (161) destiné à recevoir le liquide aspiré et muni d'une installation d'équilibrage de la pression (166).

8. Dispositif selon la revendication 7, **caractérisé en ce que** la chambre d'aspiration (190), de laquelle partent plusieurs trous d'aspiration (195), est prévue entre la lèvre racleuse (170) et une autre lèvre (175) voisine de celle-ci qui est plus courte et/ou plus flexible que la lèvre racleuse (170).

9. Dispositif selon l'une des revendications 6 à 8, **caractérisé en ce que** la lèvre racleuse (170) est disposée avec l'installation d'aspiration (180) associée sur la face du support (105) faisant face au côté ouvert du boîtier formant le support (105).

10. Dispositif selon l'une des revendications précédentes, **caractérisé en ce que** le réservoir (161) de l'installation d'aspiration (180) et de préférence aussi sa pompe (131) sont disposés dans le manche (107).

11. Dispositif selon l'une des revendications précédentes, **caractérisé en ce qu'**au moins une batterie conformée comme un accumulateur (140) est prévue comme source de courant pour chacun des dispositifs d'entraînement conformés comme des moteurs électriques et **en ce qu'**une prise de charge femelle (114) et/ou plusieurs contacts de charge sont disposés sur le manche (107) pour la mise en charge de l'accumulateur (140) associé.

12. Dispositif selon l'une des revendications précédentes, **caractérisé en ce qu'**il comporte un dispositif d'éclairage pour éclairer la surface à nettoyer (200).

13. Dispositif selon l'une des revendications précédentes, **caractérisé en ce que** la vitesse du dispositif d'entraînement (120) associé à l'organe d'essuyage (110) est réglable.

14. Dispositif selon l'une des revendications précédentes, **caractérisé en ce que** le manche (107) est conçu pour pouvoir s'allonger.

15. Dispositif selon l'une des revendications précédentes, **caractérisé en ce qu'**une installation de commutation (145) prévue au niveau du manche (107) est associée à tous les groupes pouvant être activés et désactivés ou commandés.
